# EUROPÄISCHE PATENTSCHRIFT

(11) **EP 4 000 908 B1**
(45) Veröffentlichungstag und Bekanntmachung des Hinweises auf die Patenterteilung: **21.02.2024**
(21) Anmeldenummer: 21207388.6
(22) Anmeldetag: 10.11.2021
(51) Int. Cl.: B29D 30/06

(54) **KOMBINATION UMFASSEND EINE REIFENHEIZPRESSE UND EINEN REIFENCONTAINER**
COMBINATION COMPRISING A TYRE HEATING PRESS AND A TYRE CONTAINER
COMBINAISON COMPRENANT UNE PRESSE DE CHAUFFAGE DES PNEUS ET UN RÉCIPIENT DE PNEUS

(30) Priorität: 11.11.2020 DE 102020214143
(43) Veröffentlichungstag der Anmeldung: 25.05.2022
(73) Patentinhaber: Continental Reifen Deutschland GmbH, 30165 Hannover (DE)
(72) Erfinder: Schedlbauer, Florian, 30419 Hannover (DE); Oswald, Andreas, 30419 Hannover (DE); Augustin, Christian, 30419 Hannover (DE); Weyand, Sebastian, 30419 Hannover (DE); Rapin, Marc, 30419 Hannover (DE); Wedekind, Horst, 30419 Hannover (DE); Ramm, Michael, 30419 Hannover (DE); Wenzel, Karsten, 30419 Hannover (DE); Pereira, Rui, 30419 Hannover (DE)
(74) Vertreter: Continental Corporation

(56) Entgegenhaltungen:
- EP-A2- 0 754 530
- JP-A- H0 780 845
- US-A- 4 744 739

## Beschreibung

Die Erfindung betrifft eine Kombination umfassend eine Reifenheizpresse und einen Reifencontainer.

Bei der Reifenfertigung werden aufgebaute Reifenrohlinge in Reifenheizpressen vulkanisiert und derart die fertigen Reifen hergestellt. Die Vulkanisation erfolgt dabei in einer in einem Reifencontainer eingebauten Vulkanisationsform, wobei der Reifencontainer auf austauschbare Weise in der Reifenheizpresse montiert ist und sich daher durch Austausch des Reifencontainers die Vulkanisationsform wechseln lässt, um verschieden groß dimensionierte Reifen zu vulkanisieren. Die Reifencontainer weisen eine Containerunterplatte mit einem zentrischen Aufnahmeloch und einen Containeroberteil auf. Da die Reifencontainer mehrere hundert Kilogramm wiegen, werden diese mit Flurförderfahrzeugen (Gabelstaplern) zur Reifenheizpresse an- und abtransportiert. Insbesondere ist es aktuell üblich, die Reifencontainer direkt vom Flurförderfahrzeug in die Reifenheizpressen einzuschieben. Die Ausrichtung der Reifencontainer in den Reifenheizpressen erfolgt über einen Zentrierring, welcher in das zentrische Aufnahmeloch der Containerunterplatte greift. Die rotatorische Ausrichtung erfolgt händisch und per Augenmaß. Als Bezugspunkte dienen am Reifencontainer und der Reifenheizpresse vorhandene Ausfräsungen. Beim Austauschen eines Reifencontainers ist eine Vielzahl von Schritten durchzuführen. Zu diesen Schritten gehören unter anderem Schließen von Dampfventilen, Öffnen eines Ablassventils, Demontage und Auseinanderbauen des Heizbalges, Entfernen eines Dichtringes (O-Ring), Entfernen der die Containerunterplatte haltenden Schrauben, Lösen der den Containeroberteil haltenden Schrauben, ggf. Entfernung diverser Sensoren, Demontage der Dampfleitungen, Herausnahme des demontieren Reifencontainers aus der Reifenheizpresse, Einbringen des gewünschten Reifencontainers, Zentrieren und Ausrichten des Reifencontainers mittels der erwähnten Ausfräsungen, Fixieren des Containeroberteils am Pressenoberteil, Anbringen der Dampfleitungen am Pressenoberteil, Fixieren des Containeroberteils mittels der Schrauben, Fixieren der Containerunterplatte an der Reifenheizpresse mittels der Schrauben, Montage des Adapterringes, Kalibrieren des "Tire-Loaders", Vorbereitung des Heizbalges und Montage des O-Ringes sowie Vorheizen der Reifenheizpresse. Aufgrund der Vielzahl an manuell durchzuführenden Schritten dauert der gesamte Austauschvorgang zirka zwei Stunden.

Die Patentschrift EP 0 754 530 A2 offenbart eine Reifenvulkanisierpressenanordnung, die mehrere Reifenpressen aufweist und einen Träger für Reifencontainer, der sich über Schienen geführt zwischen verschiedenen Stationen der Reifenheizpressen bewegt.

Der Erfindung liegt die Aufgabe zugrunde, eine Kombination der eingangs genannten Art zur Verfügung zu stellen, mittles welcher ein Austausch des Reifencontainers in der Reifenheizform auf rationellere und ergonomischere Weise als bisher durchführbar ist, wobei insbesondere der Zeitbedarf verringert und eine hohe Arbeitssicherheit sichergestellt werden sollen. Ferner soll ein entsprechendes Verfahren unter Verwendung der Kombination aufgezeigt werden.

Gelöst wird die gestellte Aufgabe erfindungsgemäß durch eine Kombination aus
a) einer Reifenheizpresse mit einer Pressenplatte und einem Pressenoberteil,
b) einem in der Reifenheizpresse montierbaren Reifencontainer mit einer Containerunterplatte und einem Containeroberteil,
c) einem an der Reifenheizpresse an- und/ abkoppelbaren Containerwechseltrolley,
d) einem Führungssystem zum Ein- und Ausbringen des Reifencontainers bei angekoppeltem Containerwechseltrolley, welches seitlich der Pressenplatte angeordnete Schienen oder am Containerwechseltrolley angeordnete, bei angekoppelten Containerwechseltrolley seitlich der Pressenplatte positionierbare Schienen umfasst, wobei die Schienen in vertikaler Richtung verfahrbar und durch Absenken in eine Blockierposition und durch Anheben in eine Freigabeposition bringbar sind,
e) einem Positioniersystem zur translatorischen, zentrischen und rotatorischen Ausrichtung des Reifencontainers umfassend erste Positionierelemente an der Reifenheizpresse und zweite an der Containerunterplatte befindliche Positionierelemente, zu welchen auf den Schienen des Führungssystems führbare zweite Positionierelemente gehören,

wobei die ersten und die zweiten Positionierelemente derart zusammenwirken, dass bei angekoppelten Containerwechseltrolley und in Freigabeposition befindlichen Schienen der Reifencontainer in die Reifenheizpresse ein- und aus dieser ausschiebbar ist und
bei in die Reifenheizpresse eingeschobenen Reifencontainer und in Blockierposition befindlichen Schienen der Reifencontainer ausgerichtet ist.

Die erfindungsgemäße Kombination zeichnet sich insbesondere durch den Einsatz eines Containerwechseltrolleys, eines speziellen Positioniersystems und eines speziellen Führungssystems aus. Die Elemente des Positioniersystems befindenden sich dabei sowohl an der Reifenheizpresse als auch am Reifencontainer und ermöglichen eine "automatische" translatorische, zentrische und rotatorische Ausrichtung des Reifencontainers am Containerwechseltrolley bzw. der Reifenheizpresse. Das Führungssystem ermöglicht ein schnelles Einbringen des Reifencontainers in und ein schnelles Ausbringen des Reifencontainers aus der Reifenheizpresse und ermöglicht eine schnelle Fixierung des Containerunterplatte. Der Austausch eines Reifencontainers erfolgt daher zumindest weitgehend automatisiert, wobei - im Vergleich zur derzeit üblichen Vorgangsweise - der Zeitaufwand deutlich verringert und die Arbeitssicherheit deutlich erhöht sind.

Gemäß einer bevorzugten Ausführung sind die Schienen, auf welchen die zweiten Positionierelemente führbar sind, U-Schienen, welche bei in der Reifenheizpresse eingebrachten Reifencontainer in ihrer Blockierposition die Containerunterplatte über die zweiten Positionierelemente an die Pressenplatte klemmen. Diese ermöglichen eine zusätzliche Sicherung (Fixierung) der ausgerichteten Containerunterplatte an der Pressenplatte.

Bei dieser Ausführung ist es bevorzugt, wenn die U-Schienen seitlich der Pressenplatte an der Reifenheizpresse angeordnet sind.

Gemäß einer weiteren bevorzugten Ausführung weist das Führungssystem am Containerwechseltrolley befindliche Führungsleisten auf, welche
entweder an die am Containerwechseltrolley angeordneten Schienen anschließen oder bei angekoppeltem Containerwechseltrolley an die neben der Pressenplatte angeordnete Schienen anschließen.

Dies ermöglich ein besonders komfortables Handling des Reifencontainers.

Gemäß einer weiteren bevorzugten Ausführung weist das Positioniersystem zur rotatorischen Ausrichtung des Reifencontainers auf dem Containerwechseltrolley als zweite, auf den Schienen des Führungssystems führbare Positionierelemente an der Containerunterplatte befindliche Adapterstücke auf, welche insbesondere jeweils ein kreissegmentförmiges Randstück der Containerunterplatte einfassen und eine parallel zur Sehne des Kreissegmentes verlaufende Seitenfläche aufweisen. Die Adapterstücke übernehmen vorteilhafter Weise mehrere Funktionen, nämlich eine rotatorische Ausrichtung des Reifencontainers am Containerwechseltrolley, eine einfache Führung des Reifencontainers in bzw. auf den Schienen sowie - in Kombination mit den U-Schienen - das Klemmen der Containerunterplatte an die Pressenplatte.

Gemäß einer weiteren bevorzugten Ausführung weist das Positioniersystem zur translatorischen Ausrichtung des Reifencontainers in der Reifenheizpresse als erstes Positionierelement zumindest einen an der Reifenheizpresse befindlichen Anschlag, insbesondere als erste Positionierelemente je einen Endanschlag an jeder U-Schiene für die Adapterstücke der Containerunterplatte, auf. Der Anschlag bzw. die Endanschläge ist bzw. sind einfach zu realisieren. Sind die U-Schienen mit den Endanschlägen versehen, kommt den Adapterstücken eine weitere Funktion zu, sie tragen zur translatorischen Ausrichtung des Reifencontainers bei.

Ferner ist es bevorzugt, wenn das Positioniersystem zur rotatorischen Ausrichtung des Reifencontainers in der Reifenheizpresse
als zweites Positionierelement eine in der Containerunterplatte ausgebildete Nut und als erstes Positionierelement ein auf der Pressenplatte befindliches Ausrichtelement aufweist,
wobei bei in Blockierposition befindlichen Schienen das Ausrichtelement in die Nut eingreift und bei in Freigabeposition befindlichen Schienen das Ausrichtelement mit der Nut außer Eingriff ist.

Der Blockiervorgang und die rotatorische Ausrichtung (Feinjustierung) des Reifencontainers bzw. der Containerunterplatte sind durch diese Maßnahmen auf geschickte Weise miteinander gekoppelt.

Gemäß einer weiteren bevorzugten Ausführung weist das Positioniersystem zur zentrischen Ausrichtung des Reifencontainers in der Reifenheizpresse
als zweites Positionierelement ein in der Containerunterplatte ausgebildetes zentrisches Aufnahmeloch und
als erstes Positionierelement einen auf der Pressenplatte befindlichen Zentrierring aufweist, wobei bei in Blockierposition befindlichen Schienen der Zentrierring in das Aufnahmeloch eingreift und bei in Freigabeposition befindlichen Schienen mit dem Aufnahmeloch außer Eingriff ist.

Die zentrische Ausrichtung ist durch diese Maßnahmen auf einfache und zuverlässige Weise ermöglicht.

Bei einer weiteren bevorzugten Ausführung umfasst die Kombination ein Montagesystem zur Montage des Containeroberteils am Pressenoberteil bei geschlossener Reifenheizpresse, welches von im Containeroberteil ausgebildeten T-Nuten und am Pressenoberteil befindlichen, mit den T-Nuten in und außer Eingriff bringbaren Schwenkklemmzylindern gebildet ist.

Ein derartiges Montagesystem ermöglicht ein schnelles und einfaches Montieren und Demontieren des Containeroberteils. Der Reifencontainer lässt sich daher auf besonders rationelle Weise austauschen.

Gemäß einer weiteren bevorzugten Ausführung weist die Kombination ein Heizsystem zum Erwärmen des montierten Reifencontainers auf, welches Folgendes umfasst:
- Einen in der Containerunterplatte integrierten Heizkreislauf mit Anschlussstellen,
- einen im Containeroberteil integrierten Heizkreislauf mit Anschlussstellen und
- einen Heizmediumanschluss mit einem an die Anschlussstellen der Containerunterplatte ankoppelbaren Anschlussteil und einem an die Anschlussstellen des Containeroberteils ankoppelbaren Anschlussteil.

Ein derartiges Heizsystem trägt zur Automatisierung des Containerwechselvorganges bei.

Eine weitere bevorzugte Ausführung der Kombination ist dadurch gekennzeichnet, dass sie eine Fixiereinrichtung zum An- und Abkoppeln des Containerwechseltrolleys an der Reifenheizpresse aufweist, welche Folgendes umfasst:
- Zwei am Containerwechseltrolley angebrachte, auf je einer Positionierungsbuchse aufsitzende, frei drehbar gelagerte, in vertikaler Richtung ausgerichtete Rollen,
- zwei an der Reifenheizpresse angebrachte, L-förmig gewinkelte Führungsplatten, an welchen die Rollen abrollbar sind, und
- zwei an der Reifenheizpresse angebrachte mit den Positionierungsbuchsen in und außer Eingriff bringbare, insbesondere in variabler vertikaler Position, fixier- und lösbare Positionierungsstifte.

Die Fixiereinrichtung ermöglicht ein schnelles und An- und Abkoppeln des Containerwechseltrolleys sowie gleichzeitig eine entsprechende Ausrichtung des Containerwechseltrolleys und damit auch des in der Reifenheizpresse zu montierenden Reifencontainers.

Die Erfindung betrifft ferner einen Containerwechseltrolley für eine erfindungsgemäße Kombination umfassend:
- Ein Gestell mit Gabelzinkenaufnahmen,
- zumindest einen am Gestell angeordneten Rollenförderer, auf welchem der Reifencontainer verschiebbar ist,
- zwei seitlich am Gestell angeordnete parallele Führungsleisten zur Führung des Reifencontainers und
- eine am Gestell angeordnete, in den Führungsleisten verschiebbare, an die Containerunterplatte des Reifencontainers an- und abkoppelbare Vorschubeinrichtung zum linearen Bewegen des Reifencontainers auf dem Rollenförderer.

Ein derartiger Containerwechseltrolley ermöglicht ein besonders schnelles und sicheres Handling des Reifencontainers, insbesondere ein einfaches Ein- und Ausschieben des Reifencontainers, wodurch der Zeitbedarf für den Austausch eines Reifencontainers verringert und die Arbeitssicherheit erhöht sind. Er ist daher ideal für die erfindungsgemäße Kombination geeignet. Seine Verwendung in der Kombination löst die gestellte Aufgabe daher auf eine besonders vorteilhafte Weise.

Es ist bevorzugt, wenn der Containerwechseltrolley am Gestell einen in vertikaler Richtung variabel verstellbaren Stützfuß aufweist. Ist ferner die erwähnte Fixierungseinrichtung vorgesehen, bildet der Stützfuß in Kombination mit den in variabler Position fixier- und lösbaren Positionierungsstiften einen Ausgleichmechanismus, mittels welchem sich etwaige Unebenheiten am Untergrund ausgleichen lassen, wodurch sich der Reifencontainer sehr komfortabel in die Reifenheizpresse einschieben und aus dieser herausschieben lässt.

Was das Verfahren betrifft, wird die gestellte Aufgabe erfindungsgemäß gelöst unter Verwendung der erfindungsgemäßen Kombination sowie insbesondere unter Verwendung des erfindungsgemäßen Containerwechseltrolleys, wobei das Verfahren folgende, nacheinander ablaufende Schritte aufweist:
i. Ankoppeln eines den Reifencontainer tragenden Containerwechseltrolleys an der Reifenheizpresse,
ii. Einschieben des Reifencontainers in die geöffnete Reifenheizpresse, wobei der Reifencontainer mittels des Positioniersystems translatorisch ausgerichtet wird,
iii. Zentrisches und rotatorisches Ausrichten des Reifencontainers in der Reifenheizpresse mittels der Positioniersystems,
iv. Schließen der Reifenheizpresse,
v. Montage des Containeroberteils am Pressenoberteil,
vi. In Schritt iii. oder nach Schritt v. Anklemmen der Containerunterplatte an der Pressenplatte.

Das Einbringen und Montieren des Reifencontainers lässt sich bei diesem Verfahren zumindest Großteils automatisieren und ermöglicht ein rasches Montieren des Reifencontainers in der Reifenheizpresse.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Kombination aus einer Reifenheizpresse, einem Reifencontainer und einem Containerwechseltrolley gemäß einer Ausführungsvariante der Erfindung,
Fig. 2 den Reifencontainer,
Fig. 2a eine Containerunterplatte des Reifencontainers,
Fig. 3 den Containerwechseltrolley,
Fig. 3a eine Ansicht auf ein Detail des Containerwechseltrolleys aus Fig. 3,
Fig. 4 ein Schnittansicht des Details Z₄ der Fig. 1,
Fig. 5 eine Ansicht im Bereich des Details Z₄, wobei nur der zur Reifenheizpresse gehörende Bereich gezeigt ist,
Fig. 6 eine vereinfachte Rückansicht gemäß der in Fig. 1 durch den Peil S₆ angedeuteten Sichtrichtung mit einem Teilschnitt, wobei sich der Reifencontainer in der Reifenheizpresse befindet,
Fig. 7 eine weitere, zu Fig. 6 analoge Rückansicht,
Fig. 8 eine Detailansicht gemäß der in Fig. 1 durch den Peil S₈ angedeuteten Sichtrichtung, wobei sich der Reifencontainer in der Reifenheizpresse befindet,
Fig. 9 eine Detailansicht gemäß der in Fig. 1 durch den Peil S₉ angedeuteten Sichtrichtung, wobei sich der Reifencontainer in der Reifenheizpresse befindet,
Fig. 10 die Reifenheizpresse mit montiertem Reifencontainer und
Fig. 11 eine vereinfachte Draufsicht auf die Reifenheizpresse.

In einigen Figuren sind zum besseren Verständnis der Erfindung einzelne Bauteile bzw. Elemente nicht gezeigt.

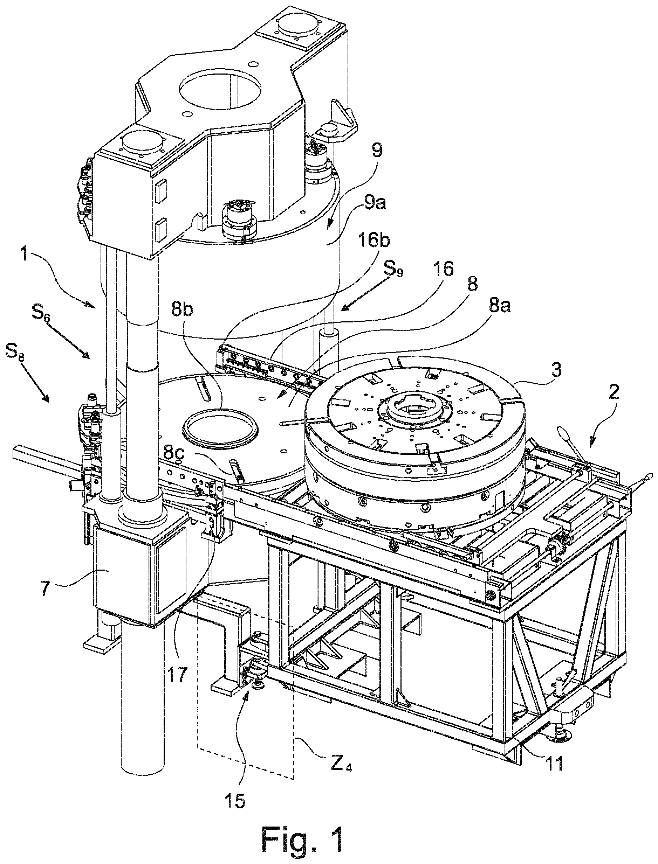

Fig. 1 zeigt eine Kombination aus einer Reifenheizpresse 1, einem an dieser ankoppelbaren und in Fig. 1 an dieser ankoppelten Containerwechseltrolley 2 mit einem Reifencontainer 3.

Um mittels der Reifenheizpresse 1 Reifenrohlinge zu vulkanisieren, ist in dieser ein eine Vulkanisationsform enthaltender, im Wesentlichen kreiszylindrischer Reifencontainer 3 in liegender Position zu montieren. Durch Austausch des Reifencontainers 3 können in der Reifenheizpresse 1 unterschiedlich ausgeführte, insbesondere unterschiedlich dimensionierte, Reifenrohlinge vulkanisiert werden.

Der Reifencontainer 3 wird auf einem Containerwechseltrolley 2 mittels eines Flurförderfahrzeuges, insbesondere einem Niederhubwagen, antransportiert, anschließend wird der Containerwechseltrolley 2 an die Reifenheizpresse 1 angekoppelt, der Reifencontainer 3 in die Reifenheizpresse 1 eingebracht und in dieser montiert. Zum Austausch eines montierten Reifencontainers 3 ist dieser vorab zu demontieren, auf den "leeren" an der Reifenheizpresse 1 angekoppelten Containerwechseltrolley 2 aufzubringen und der Containerwechseltrolley 2 von der Reifenheizpresse 1 abzukoppeln und wegzubewegen. Der Reifencontainer 3 wird vom Containerwechseltrolley 2 abgenommen, und der gewünschten Reifencontainer 3 wird auf den Containerwechseltrolley 2 aufgebracht. Nachfolgend wird der Containerwechseltrolley 2 mit dem gewünschten Reifencontainer 3 antransportiert, der Containerwechseltrolley 2 wird angekoppelt und der gewünschte Reifencontainer 3 in der Reifenheizpresse 1 montiert.

Die erfindungsgemäße Kombination umfasst ein Positioniersystem und ein Führungssystem. Das Positioniersystem weist an der Reifenheizpresse 1 ausgebildete erste Positionierelemente und am Reifencontainer 3 ausgebildete zweite Positionierelemente auf. Das Führungssystem umfasst ebenfalls Elemente an der Reifenheizpresse 1 und am Reifencontainer 3. Ferner ist bevorzugt noch ein Montagesystem für den Reifencontainer 3 vorgesehen. Nachfolgend wird zuerst auf die grundsätzliche Ausgestaltung des Reifencontainers 3, des Containerwechseltrolleys 2 und der Reifenheizpresse 1 eingegangen. Im Rahmen einer anschließenden Funktionsbeschreibung ergeben sich die Elemente des Führungssystems, des Positioniersystems und des Montagesystems.

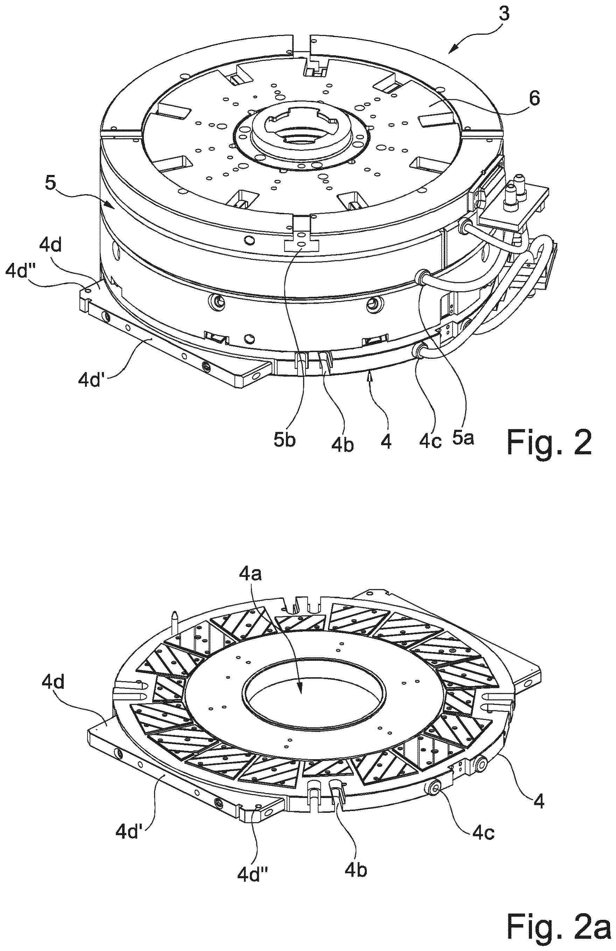

Fig. 2 zeigt einen Reifencontainer 3. Der Reifencontainer 3 setzt sich aus einer im Wesentlichen kreisringförmigen Containerunterplatte 4 (Fig. 2a) und einem von dieser abnehmbaren, im Wesentlichen kreiszylindrischen Containeroberteil 5 mit einer eingesetzten kreisförmigen Containeroberplatte 6 zusammen. Wie Fig. 2a zeigt, weist die Containerunterplatte 4 ein sie durchsetzendes, zentrisches Aufnahmeloch 4a, vier zueinander um 90° versetzt ausgebildete Paare von länglichen Nuten 4b, welche die Containerunterplatte 4 durchsetzen und sich vom äußeren Umfang der Containerunterplatte 4 in radialer Richtung in diese hineinerstrecken, zwei einander diametral gegenüberliegende, jeweils mittig zwischen zwei Paaren von länglichen Nuten 4a ausgebildete Adapterstücke 4d und einen integrierten Heizkreislauf (nicht sichtbar) mit zwei am äußeren Umfang befindlichen Anschlussstellen 4c auf. Die Adapterstücke 4d fassen jeweils ein kreissegmentförmiges Randstück der Containerunterplatte 4 ein und weisen jeweils eine parallel zur Sehne des Kreissegmentes verlaufende Seitenfläche 4d` und an ihrer Oberseite ein Aufnahmeloch 4d" auf. Gemäß Fig. 2 ist der Containeroberteil 5 neben der Containeroberplatte 6 mit vier zueinander um 90° versetzt ausgebildeten T-Nuten 5b versehen, welche am äußeren Umfang ausgebildet sind, bis zur Containeroberplatte 6 reichen und im Wesentlichen gegenüberliegend zu den länglichen Nuten 4b der Containerunterplatte 4 ausgebildet sind. Ferner weist der Containeroberteil 5 einen integrierten Heizkreislauf (nicht gezeigt) mit am äußeren Umfang befindlichen Anschlussstellen 5a auf.

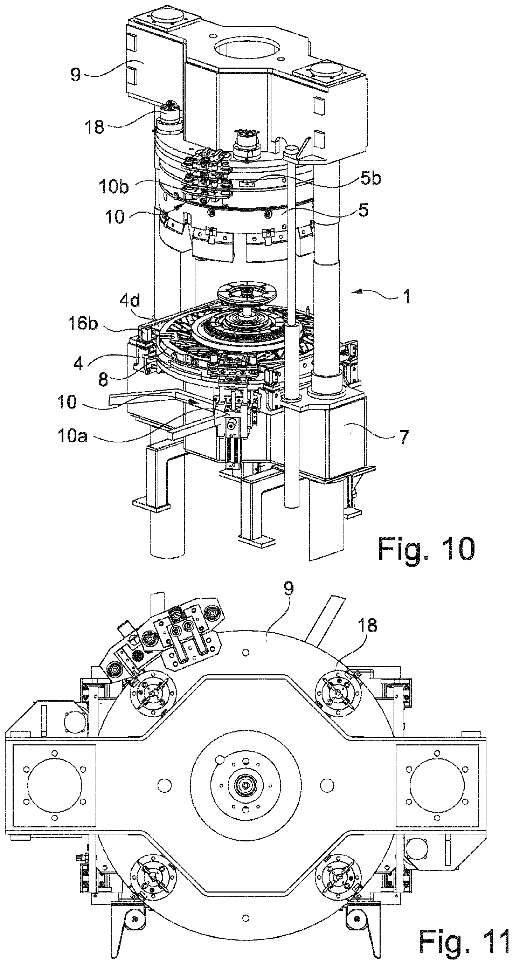

Gemäß Fig. 1 und Fig. 10 umfasst die Reifenheizpresse 1 ein Gestell 7, eine ortsfeste, waagrecht ausgebildete, kreisringförmige Pressenplatte 8 (Fig. 1), einen in vertikaler Richtung auf- und abbewegbaren Pressenoberteil 9 mit gehäuseartigem Hitzeschild 9a (in Fig. 10 ohne Hitzeschild 9a gezeigt), einen vertikal verfahrbaren nicht gezeigten Heizbalg und einen zweigeteilten Heizmediumanschluss 10 (Fig. 10) mit einem neben der Pressenplatte 8 am Gestell 7 angeordneten unteren Anschlussteil 10a (Fig. 10) für die Anschlussstellen 4c der Containerunterplatte 4 (Fig. 2) und einem am Pressenoberteil 9 angeordneten oberen Anschlussteil 10b für die Anschlussstellen 5a des Containeroberteils 5 (Fig. 2). In den unteren Anschlussteil 10a und in den oberen Anschlussteil 10b ist ein Heizmedium einleitbar, sodass der montierte Reifencontainer 3 auf die gewünschte Vulkanisationstemperatur erhitzt werden kann.

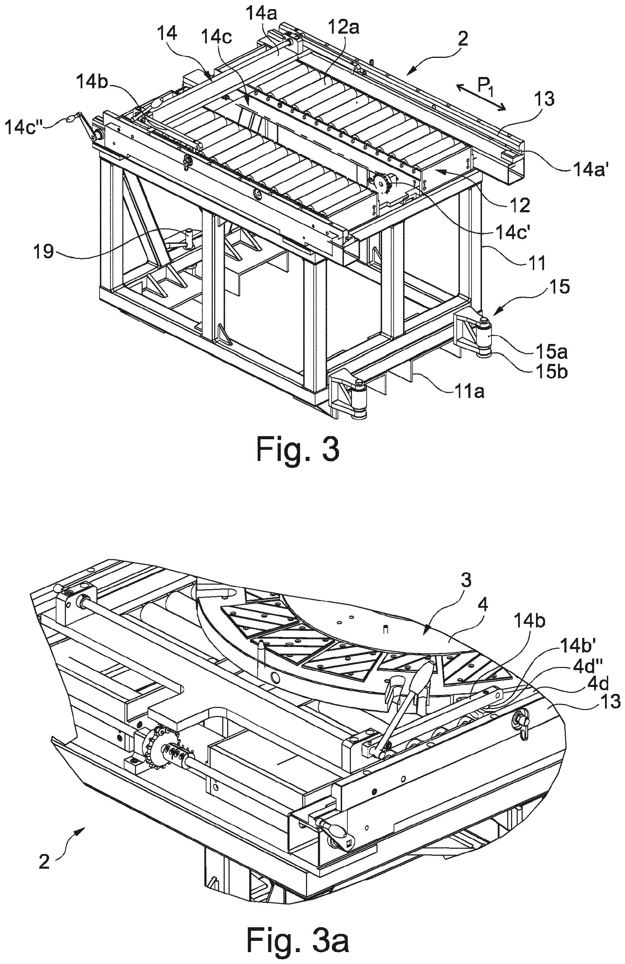

Gemäß Fig. 3 weist der Containerwechseltrolley 2 ein quaderförmiges, aus Rahmen aufgebautes Gestell 11 mit an der Unterseite befindlichen Gabelzinkenaufnahmen 11a zum Transport des Containerwechseltrolleys 2 mittels des erwähnten Flurförderfahrzeuges, zwei Rollenförderer 12, zwei seitliche Führungsleisten 13 und eine Vorschubeinrichtung 14 auf. Ein am Containerwechseltrolley 2 positionierter Reifencontainer 3 ist gemäß der durch den Doppelpfeil P₁ angedeuteten Richtung auf lineare Weise verschiebbar (Transportrichtung).

Die zwei Rollenförderer 12, die zwei Führungsleisten 13 und die Vorschubeinrichtung 14 befinden sich an der Oberseite des Gestells 11. Die Führungsleisten 13 sind parallel zueinander ausgerichtet und außenseitig auf dem Gestell 11 montiert. Die Rollenförderer 12 befinden sich nebeneinander im Bereich zwischen den Führungsleisten 13, sind gegenüber diesen nach unten abgesetzt und weisen jeweils eine Vielzahl von in übereinstimmenden Höhenpositionen befindliche Rollen 12a auf, welche horizontal sowie frei drehbar gelagert und senkrecht zu den Führungsleisten 13 orientiert sind. Die Vorschubeinrichtung 14 umfasst eine rechteckige Basisplatte 14a, zwei stabförmige Mitnehmer 14b und einen Kettenantrieb 14c. Die rechteckige Basisplatte 14a ist in gestellinnenseitig in den Führungsleisten 13 ausgebildeten Nuten 14a` linear verschiebbar. Die stabförmigen Mitnehmer 14b sind an der rechteckigen Basisplatte 14a in vertikaler Richtung schwenkbar gelagert, befinden sich neben den Führungsleisten 13 und weisen je ein Eingriffelement 14b' (Fig. 3a) für die Aufnahmelöcher 4d" der Adapterstücke 4d der Containerunterplatte 4 (Fig. 3a) auf. Der Kettenantrieb 14c wirkt auf die Basisplatte 14a, weist zwei zwischen den Rollenförderern 12 befindliche Zahnräder 14c` und eine zumindest auf eines der Zahnräder 14c` wirkende Handkurbel 14c" zur Betätigung des Kettenantriebes 14c auf.

Wie insbesondere Fig. 3a zeigt, ist der Reifencontainer 3 (in Fig. 3a ist nur die Containerunterplatte 4 gezeigt) derart am Containerwechseltrolley 2 zu positionieren, dass die Adapterstücke 4d an den Führungsleisten 13 anliegen und die Eingriffelemente 14b` der Mitnehmer 14b in die Aufnahmelöcher 4d" einbringbar sind. Die Adapterstücke 4d gestatten daher genau zwei mögliche rotatorische Ausrichtungen des Reifencontainers 3 am Containerwechseltrolley 2, wobei der Reifencontainer 3 in der erläuterten Ausrichtung am Containerwechseltrolley 2 zu positionieren ist. Dadurch ist gleichzeitig sichergestellt, dass die erwähnten Anschlussstellen 4c, 5a (Fig. 2) an den entsprechenden Anschlussteil 10a, 10b des Heizmediumanschlusses 10 anschließbar sind.

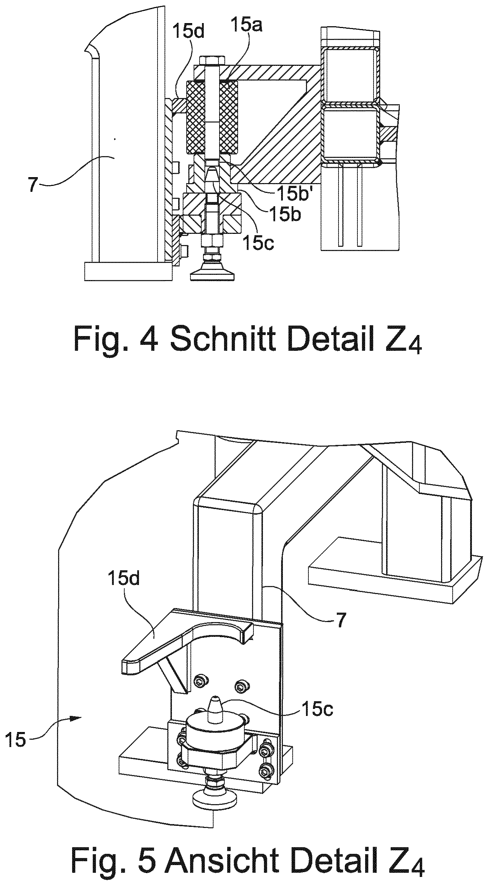

Gemäß Fig. 1 ist der Containerwechseltrolley 2 über sein Gestell 11 am Gestell 7 der Reifenheizpresse 1 mittels einer Fixiereinrichtung 15 ankoppelbar, wobei sich die Bauteile der Fixiereinrichtung 15 in korrespondierenden Positionen zum Teil am Gestell 11 und zum Teil am Gestell 7 befinden. Wie Fig. 3 zeigt, sind die am Gestell 11 des Containerwechseltrolleys 2 befindlichen Bauteile der Positionier- und Fixereinrichtung 15 zwei randseitig am unteren Bereich des Gestells 11 angeordnete, in vertikaler Richtung orientierte, als Hohlzylinder ausgeführte, frei drehbar gelagerte Kunststoffrollen 15a, welche jeweils auf einer Positionierungsbuchse 15b mit einer nach unten geöffneten Zentrierbohrung 15b` aufsitzen (Fig. 4). Gemäß Fig. 5 sind die am Gestell 7 der Reifenheizpresse 1 befindlichen Bauteile der Positionier- und Fixereinrichtung 15 zwei am unteren Bereich des Gestells 7 angeordnete Positionierungsstifte 15c und je eine oberhalb der Positionierungsstifte 15c befindliche L-förmig gewinkelte Führungsplatte 15d. Die Positionierungsstifte 15c sind in vertikaler Richtung ausgerichtet, passend zu den Zentrierbohrungen 15b` (Fig. 4) ausgebildet und in variabler vertikaler Position fixier- und lösbar. Zum Ankoppeln eines Containerwechseltrolleys 2 wird dieser mittels des Flurförderfahrzeuges an die Reifenheizpresse 1 herangefahren, wobei die Kunststoffrollen 15a (Fig. 3, Fig. 4) an den Führungsplatten 15d (Fig. 5) abrollen und derart die Zentrierbohrungen 15b` gegenüber den Positionierungsstiften 15c ausgerichtet werden. Anschließend wird der Containerwechseltrolley 2 durch entsprechendes Betätigen des Flurförderfahrzeuges abgesenkt, sodass die Positionierungsstifte 15c in die Zentrierbohrungen 15b` eingebracht werden (Fig. 4). Die Positionierungsstifte 15c sind somit auf lösbare Weise mit den Zentrierbohrungen 15b` in Eingriff bringbar, sodass die Positionierungsstifte 15c gemeinsam mit den Positionierungsbuchsen 15b zwei fixier- und lösbare Stiftverbindung bilden.

Ferner ist am unteren Bereich des Gestelles 11 des Containerwechseltrolleys 2 ein in vertikaler Richtung variabel verstellbarer Stützfuß 19 (Fig. 3) angeordnet, welcher sich gegenüberliegend zu den Rollen 15a befindet. Durch Einstellen der vertikalen Positionen des Stützfußes 19 und der Positionierungsstifte 15c (Fig. 5) lassen sich etwaige Unebenheiten am Untergrund ausgleichen.

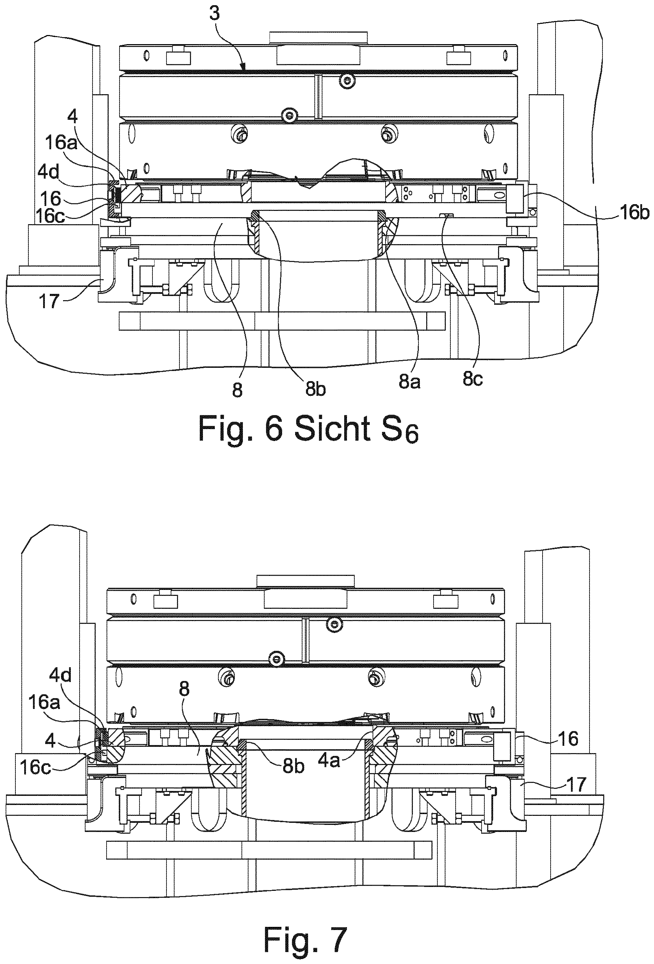

Wie Fig. 1 ferner zeigt, weist die Pressenplatte 8 eine mit dem Durchmesser des gezeigten Reifencontainers 3 korrespondieren Durchmesser, eine waagrechte, ebene Oberseite 8a, einen zentrisch auf dieser ausgebildeten Zentrierring 8b für das Aufnahmeloch 4a der Containerunterplatte 4 (Fig. 2a) und ein auf der Oberseite 8a ausgebildetes, von dieser abragendes Ausrichtelement 8c (vergleiche Fig. 6) für eine der länglichen Nuten 4b (Fig. 2a) der Containerunterplatte 4 auf. Die Position und Ausführung des Zentrierringes 8b und des Ausrichtelementes 8c korreliert mit der Position und Ausführung des Aufnahmeloches 4a bzw. einer der länglichen Nuten 4b. Der Zentrierring 8b ist ferner derart ausgeführt, dass der erwähnte Heizbalg von unten durch den Zentrierring 8b hochfahrbar ist.

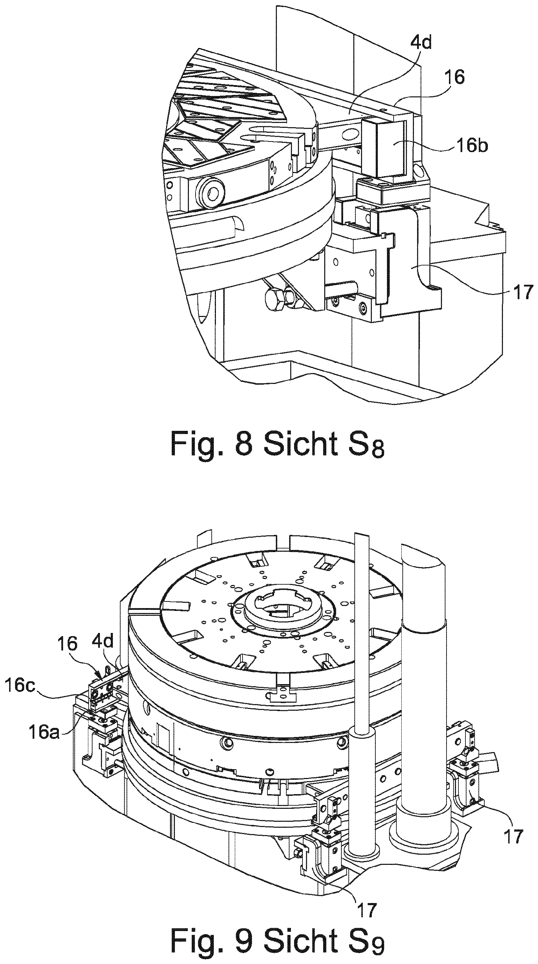

Seitlich der Pressenplatte 8 befinden sich zwei einander diametral gegenüberliegende, parallel zueinander ausgerichtete, liegende U-Schienen 16 mit zur Oberseite 8a der Pressenplatte 8 und zueinander weisenden U-Schenkeln 16a (Fig. 6), je einem dem angekoppelten Containerwechseltrolley 2 abgewandten Endanschlag 16b (vergl. Fig. 8) und einer an ihrem unteren U-Schenkel 16a eingebauten Rollenleiste 16c (Fig. 9). Die U-Schienen 16 befinden sind jeweils auf zwei am Gestell 7 befestigten Hydraulikzylindern 17 (siehe auch Fig. 6 bis 9), mittels welchen die U-Schienen 16 in vertikaler Richtung und somit gegenüber der Pressenplatte 8 anheb- und absenkbar sind. Fig. 6 zeigt die U-Schienen 16 in angehobener Position (Freigabeposition), Fig. 7 zeigt die U-Schienen 16 in abgesenkter Position (Blockierposition). In Freigabeposition der U-Schienen 16 und nachdem erforderlichenfalls mittels des Stützfußes 19 und der Positionierungsstifte 15c etwaige Unebenheiten am Untergrund ausgeglichen wurden, ist der Reifencontainer 3 vom angekoppelten Containerwechseltrolley 2 in die Reifenheizpresse 1 einschiebbar, wobei zwischen der Containerunterplatte 4 und der Pressenplatte 8 ein Abstand verbleibt und der Reifencontainer 3 über den Zentrierring 8b schiebbar ist (Fig. 6).

Wie Fig. 10 in Kombination mit Fig. 11 zeigt, weist der Pressenoberteil 9 vier Schwenkklemmzylinder 18 auf, welche um 90° zueinander versetzt angeordnet und mit den T-Nuten 5b (Fig. 2) des Containeroberteils 5 auflösbare Weise in Eingriff bringbar sind, sodass der Containeroberteil 5 am Pressenoberteil 9 an- und abkoppelbar ist.

Nachfolgend wird die Vorgangsweise zum Ein- und Ausbringen bzw. zum Austauschen eines Reifencontainers 3 erläutert.

Zunächst kann es vorgesehen sein, den einzubringenden Reifencontainer 3 vor dem Aufbringen auf den Containerwechseltrolley 2 an einer Vorheizstation, über die Anschlussstellen 4c, 5a vorzuwärmen.

Der Reifencontainer 3 wird auf dem Containerwechseltrolley 2 antransportiert und der Containerwechseltrolley 2 an der Reifenheizpresse 1 über die Fixiereinrichtung 15 angekoppelt (Fig. 1). Falls erforderlich werden nach dem Ankoppeln mittels des Stützfußes 19 und der Positionierungsstifte 15c etwaige Unebenheiten am Untergrund ausgeglichen, wie bereists erwähnt. Falls noch nicht geschehen, wird die Reifenheizpresse 1 geöffnet, die U-Schienen 16 neben der Pressenplatte 8 durch Betätigen der Hydraulikzylinder 17 in ihre Freigabeposition gebracht (Fig. 1, Fig. 6) und der Reifencontainer 3 wird mit der Vorschubeinrichtung 14 auf die beschriebene Weise verbunden (Fig. 1, Fig. 3a). Durch Betätigen der Vorschubeinrichtung 14 wird der Reifencontainer 3 über die Pressenplatte 8 geschoben (Fig. 6), wobei die Adapterstücke 4d der Containerunterplatte 4 auf den Rollenleisten 16c in die U-Schienen 16 gleiten (Fig. 9) bis die Adapterstücke 4d an den Endanschlägen 16b anschlagen (Fig. 8, Fig. 10), wodurch eine translatorische Ausrichtung des Reifencontainers 3 in der Reifenheizpresse 1 erreicht ist. Anschließend wird der Reifencontainer 3 von der Vorschubeinrichtung 14 abgekoppelt und die U-Schienen 16 werden mit den Hydraulikzylindern 17 nach unten gefahren (vergleiche Fig. 6 mit Fig. 7), wodurch die Adapterstücke 4d den Kontakt zu den Rollenleisten 16c verlieren und mit den oberen U-Schenkeln 16a der U-Schienen 16 in Kontakt treten (Fig. 7) und derart die Containerunterplatte 4 kraftschlüssig auf die Pressenplatte 8 geklemmt wird (Fig. 7, Blockierposition der U-Schienen 16), wobei gleichzeitig das Ausrichtelement 8c (Fig. 6) in eine der länglichen Nuten 4b der Containerunterplatte 4 und der Zentrierring 8b der Pressenplatte 8 in das Aufnahmeloch 4a der Containerunterplatte 4 greift (Fig. 7), wodurch der Reifencontainer 3 rotatorisch und zentrisch ausgerichtet (feinjustiert) wird. Ferner wird die Containerunterplatte 4 dabei vorzugsweise gleichzeitig über ihre Anschlussstellen 4c (Fig. 2) an den unteren Anschlussteil 10a des Heizmediumanschlusses 10 angekoppelt (Fig. 10). Anschließend wird der Pressenoberteil 9 heruntergefahren und der Containeroberteil 5 über seine T-Nuten 5b mittels der Schwenkklemmzylinder 18 am Pressenoberteil 9 befestigt. Dabei greifen die Schwenkklemmzylinder 18 zunächst in die T-Nuten 5b, werden anschließend um eine Hochachse um 90° verdreht (formschlüssige Verbindung) und ziehen den Containeroberteil 5 nachfolgend in vertikaler Richtung an den Pressenoberteil 9 heran (kraftschlüssige Verbindung), wodurch bevorzugt gleichzeitig der Containeroberteil 5 über seine Anschlussstellen 5a (Fig. 2) an den oberen Anschlussteil 10b des Heizmediumanschlusses 10 angekoppelt wird (in Fig. 2 ist der angekoppelte Zustand angedeutet). Nachfolgend wird die Reifenheizpresse 1 durch Nachobenfahren des Pressenoberteils 9 geöffnet (Fig. 10). Das Ankoppeln der Containerunterplatte 3 an den unteren Anschlussteil 10a des Heizmediumanschlusses 10 sowie das Ankoppeln des Containeroberteils 5 an den oberen Anschlussteil 10b des Heizmediumanschlusses 10 kann optional jeweils auch erst dann erfolgen, nachdem die Containerunterplatte 3 mittels der U-Schienen 16 geklemmt bzw. nachdem der Containeroberteil 5 mittles der Schwenkklemmzylinder 18 befestigt wurde.

Nach Abkoppeln des Containerwechseltrolleys 2 vom Gestell 7 der Reifenheizpresse 1 ist die Reifenheizpresse 1 einsatzbereit. Nach Einbringen eines Reifenrohlings in die Reifenheizpresse 1 wird die Reifenheizpresse 1 geschlossen, wobei der Pressenoberteil 9 mitsamt angekoppeltem Containeroberteil 5 nach unten fährt. Der Reifenrohling wird vulkanisiert, wobei der erwähnte Heizbalg ins Innere des Reifencontainers 3 eingefahren und aufgeblasen wird. Der fertig vulkanisierte Reifen wird nach Öffnen der Reifenheizpresse 1 entnommen.

Zur Demontage des Reifencontainers 3 wird in entsprechend umgekehrter Reihenfolge vorgegangen. Es wird also der Containerwechseltrolley 2 an die Reifenheizpresse 1 angekoppelt und falls erforderlich werden etwaige Unebenheiten am Untergrund ausgeglichen, wie bereits erläutert. Die Reifenheizpresse 1 wird geschlossen und die Schwenkklemmzylinder 18 werden verdreht, sodass der Containeroberteil 5 vom Pressenoberteil 9 gelöst wird. Die Reifenheizpresse 1 wird geöffnet und die U-Schienen 16 werden mittels der Hydraulikzylinder 17 hochgefahren, sodass das Ausrichtelement 8c aus der entsprechenden länglichen Nut 4b der Containerunterplatte 4 gehoben und der Reifencontainer 3 über das Niveau des Zentrierringes 8b angehoben wird (d.h. die U-Schienen 16 werden von der Blockierposition in die Freigabeposition bewegt). Die Vorschubeinrichtung 14 wird an die Adapterstücke 4d angebunden, der Reifencontainer 3 aus der Reifenheizpresse 1 herausgezogen und auf den Containerwechseltrolley 2 aufgebracht. Mittles eines Flurförderfahrzeuges kann der Containerwechseltrolley 2 bei Bedarf weggefahren werden.

Das Führungssystem, das Positioniersystem und das Montagesystem, welche eingangs bereits erwähnt wurden, sind daher durch folgende Elemente gebildet.

Das Führungssystem umfasst die vertikal verfahrbaren U-Schienen 16 an der Reifenheizpresse 1 sowie die Führungsleisten 13 am Containerwechseltrolley 2.

Die ersten, an der Reifenheizpresse 1 befindlichen Positionierelemente des Positioniersystems sind durch den an der Pressenplatte 8 befindlichen Zentrierring 8b, das an dieser befindliche Ausrichtelement 8c sowie durch die Endanschläge 16b der U-Schienen 16 gebildet. Die am Reifencontainer 3 befindlichen zweiten Positionierelemente sind das Aufnahmeloch 4a, die länglichen Nuten 4b und die Adapterstücke 4d. Das Positioniersystem ermöglicht die translatorische, zentrische und rotatorische Ausrichtung des Reifencontainers 3.

Das Montagesystem umfasst die am Pressenoberteil 9 befindlichen Schwenkklemmzylinder 18 und die korrespondieren T-Nuten 5b im Containeroberteil 5. Das Montagesystem ermöglicht die Montage des Containeroberteils 5 am Pressenoberteil 9 bei auf die Pressenplatte 8 abgesenktem Reifencontainer 3.

Die Erfindung ist auf das beschriebene Ausführungsbeispiel nicht beschränkt.

Die erfindungsgemäße Kombination umfasst zumindest einen Containerwechseltrolley. Ferner kann die Kombination insbesondere zwei Containerwechseltrolleys umfassen, nämlich einen ersten für den in der Reifenheizpresse befindlichen, zu demontierenden Reifencontainer und einen zweiten für den jeweils in der Reifenheizpresse zu montierenden Reifencontainer. Auf diesem zweiten Containerwechseltrolley kann der jeweils gewünschte Reifencontainer bereits positioniert werden, während der auszutauschende Reifencontainer gerade demontiert wird. Der Austauschvorgang lässt sich dementsprechend beschleunigen.

Der bzw. die Containerwechseltrolley(s) 2 kann bzw. können anstelle des Kettenantriebes 14c einen beliebigen Antrieb, beispielsweise einen Zahnstangenantrieb, aufweisen. Anstatt der erwähnten Handkurbel 14c" kann beispielsweise ein Spindelantrieb oder dergleichen vorgesehen sein.

Die Größe der Reifencontainer 3 ist üblicherweise von der Größe der Vulkanisationsform und daher von der jeweiligen Reifendimension abhängig. Bevorzugt sind bei kleineren Reifencontainern 3 - im Vergleich zu größeren Reifencontainern 3 - die Adapterstücke 4d der Containerunterplatte 4 entsprechend größer ausgeführt. Das Montagesystem zur Montage des Containeroberteils lässt sich insbesondere in an sich bekannter Weise an die Größe des Containeroberteils entsprechend anpassen.

Die Containerunterplatte 4 kann insbesondere nur eine einzige Nut 4b oder vier Nuten 4b, welche analog zu den Paaren Nuten 4b im Ausführungsbeispiel ausgebildet sind, aufweisen.

Anstelle der erwähnten Hydraulikzylinder 17 kann eine beliebige geeignete Hubeinrichtung zum Anheben und Absenken der U-Schienen 16 vorgesehen sein. Beispielsweise kommen Pneumatikzylinder, elektrische betätigbare Zylinder oder dergleichen in Frage.

Das Führungssystem kann anstelle der neben der Pressenplatte 8 befindlichen U-Schienen 16 am Containerwechseltrolley 2 befindliche, bei angekoppelten Containerwechseltrolley 2 seitlich der Pressenplatte 8 angeordnete U-Schienen umfassen, welche mit einer am Containerwechseltrolley 2 ausgebildeten Hubeinrichtung in vertikaler Richtung verfahrbar sind. Bei dieser Variante befindet sich die Hubeinrichtung also am Containerwechseltrolley 2. Diese U-Schienen werden beim Ein- und Ausbringen eines Reifencontainers 3 in vertikaler Richtung entsprechend verfahren und der Containerwechseltrolley 2 bleibt bevorzugt während der Vulkanisation an der Reifenheizpresse angekoppelt. Alternativ kann auch vorgesehen sein, dass die U-Schienen nachdem sie in ihre Blockierposition gefahren sind (d.h. nach Einbringen und Absenken des Reifencontainers auf die Pressenplatte) durch Wegbewegen (Abkoppeln) des Containerwechseltrolleys aus der Reifenheizpresse herausgezogen werden.

Bei sämtlichen Varianten können anstelle von U-Schienen beliebig geeignete Schienen verwendet werden, insbesondere ist es nicht erforderlich, dass die Schienen in ihrer Blockierposition (abgesenkte Position) die Containerunterplatte 4 an die Pressenplatte 8 klemmen, da die Containerunterplatte 4 mittels der ersten und der zweiten Positionierelemente entsprechend gegen ein Verschieben gesichert ist.

Die Funktion der Endanschläge 16b (translatorische Ausrichtung des Reifencontainers 3 in der Reifenheizpresse 1) kann alternativ durch ein anderes oder mehrere andere erste Positionierelement(e), welches bzw. welche nicht unmittelbar an den U-Schienen 16 bzw. Schienen angeordnet sind, bewerkstelligt werden. Beispielsweise könnte die translatorische Ausrichtung des Reifencontainers 3 in der Reifenheizpresse 1 mittels eines an einer anderen Position befindlichen Anschlages bewerkstelligt werden.

Bei der Montage eines Reifencontainers 3 ist es lediglich erforderlich, dass der Reifencontainer 3 auf der Pressenplatte 8 aufliegt, sich die jeweiligen Schienen daher in ihrer Blockierposition befinden.

### Bezugsziffernliste

- 1: Reifenheizpresse
- 2: Containerwechseltrolley
- 3: Reifencontainer
- 4: Containerunterplatte
- 4a: Aufnahmeloch
- 4b: längliche Nut
- 4c: Anschlussstelle
- 4d: Adapterstück
- 4d': Seitenfläche
- 4d": Aufnahmeloch
- 5: Containeroberteil
- 5a: Anschlussstelle
- 5b: T-Nut
- 6: Containeroberplatte
- 7: Gestell
- 8: Pressenplatte
- 8a: Oberseite
- 8b: Zentrierring
- 8c: Ausrichtelement
- 9: Pressenoberteil
- 9a: Hitzeschild
- 10: zweigeteilter Heizmediumanschluss
- 10a: unterer Anschlussteil
- 10b: oberer Anschlussteil
- 11: Gestell
- 11a: Gabelzinkenaufnahme
- 12: Rollenförderer
- 12a: Rolle
- 13: Führungsleiste
- 14: Vorschubeinrichtung
- 14a: Basisplatte
- 14a: Nut
- 14b: Mitnehmer
- 14b': Eingriffelement
- 14c: Kettenantrieb
- 14c: Zahnrad
- 14c": Handkurbel
- 15: Fixiereinrichtung
- 15a: Kunststoffrolle
- 15b: Positionierungsbuchse
- 15b': Zentrierbohrung
- 15c: Positionierungsstift
- 15d: Führungsplatte
- 16: U-Schiene
- 16a: U-Schenkel
- 16b: Endanschlag
- 16c: Rollenleiste
- 17: Hydraulikzylinder
- 18: Schwenkklemmzylinder
- 19: Stützfuß
- S₆, S₈, S₉: Pfeil (Sichtrichtung)
- P₁: Pfeil (Transportrichtung)
- Z₄, Z₅: Detail

## Patentansprüche

1. Kombination aus
a) einer Reifenheizpresse (1) mit einer Pressenplatte (8) und einem Pressenoberteil (9),
b) einem in der Reifenheizpresse (1) montierbaren Reifencontainer (3) mit einer Containerunterplatte (4) und einem Containeroberteil (5),
c) einem an der Reifenheizpresse (1) an- und/ abkoppelbaren Containerwechseltrolley (2),
**dadurch gekennzeichnet, dass** die Kombination weiterhin aufweist:
d) ein Führungssystem zum Ein- und Ausbringen des Reifencontainers (3) bei angekoppeltem Containerwechseltrolley (2), welches seitlich der Pressenplatte (8) angeordnete Schienen (16) oder am Containerwechseltrolley (2) angeordnete, bei angekoppelten Containerwechseltrolley (2) seitlich der Pressenplatte (8) befindliche bzw. positionierbare Schienen umfasst,
wobei die Schienen (16) in vertikaler Richtung verfahrbar und durch Absenken in eine Blockierposition und durch Anheben in eine Freigabeposition bringbar sind,
e) ein Positioniersystem zur translatorischen, zentrischen und rotatorischen Ausrichtung des Reifencontainers (3) umfassend erste Positionierelemente (8b, 8c, 16b) an der Reifenheizpresse (1) und zweite an der Containerunterplatte (4) befindliche Positionierelemente (4a, 4b, 4d), zu welchen auf den Schienen (16) des Führungssystems führbare zweite Positionierelemente (4d) gehören,
wobei die ersten und die zweiten Positionierelemente (4a, 4b, 4d, 8a, 8c, 16b) derart zusammenwirken, dass
bei angekoppelten Containerwechseltrolley (2) und in Freigabeposition befindlichen Schienen (16) der Reifencontainer (3) in die Reifenheizpresse (1) ein- und aus dieser ausschiebbar ist und
bei in die Reifenheizpresse (1) eingeschobenen Reifencontainer (3) und in Blockierposition befindlichen Schienen (16) der Reifencontainer (3) ausgerichtet ist.

2. Kombination nach Anspruch 1, **dadurch gekennzeichnet, dass** die Schienen, auf welchen die zweiten Positionierelemente (4d) führbar sind, U-Schienen (16) sind, welche bei in der Reifenheizpresse (1) eingebrachten Reifencontainer (3) in ihrer Blockierposition die Containerunterplatte (4) über die zweiten Positionierelemente (4d) an die Pressenplatte (8) klemmen.

3. Kombination nach Anspruch 2, **dadurch gekennzeichnet, dass** die U-Schienen (16) seitlich der Pressenplatte (8) an der Reifenheizpresse (1) angeordnet sind.

4. Kombination nach einem der Ansprüche 1 bis 3, **dadurch gekennzeichnet, dass** das Führungssystem am Containerwechseltrolley (2) befindliche Führungsleisten (13) aufweist, welche
entweder an die am Containerwechseltrolley (2) angeordneten Schienen (16) anschließen oder
bei angekoppeltem Containerwechseltrolley (2) an die neben der Pressenplatte (8) angeordnete Schienen (16) anschließen.

5. Kombination nach einem der Ansprüche 1 bis 4, **dadurch gekennzeichnet, dass** das Positioniersystem zur rotatorischen Ausrichtung des Reifencontainers (3) auf dem Containerwechseltrolley (2)
als zweite, auf den Schienen (16) des Führungssystems führbare Positionierelemente (4d) an der Containerunterplatte (4) befindliche Adapterstücke (4d) aufweist, welche insbesondere jeweils ein kreissegmentförmiges Randstück der Containerunterplatte (4) einfassen und eine parallel zur Sehne des Kreissegmentes verlaufende Seitenfläche (4d') aufweisen.

6. Kombination nach einem der Ansprüche 1 bis 5, **dadurch gekennzeichnet, dass** das Positioniersystem zur translatorischen Ausrichtung des Reifencontainers (3) in der Reifenheizpresse (1)
als erstes Positionierelement zumindest einen an der Reifenheizpresse (1) befindlichen Anschlag, insbesondere als erste Positionierelemente je einen Endanschlag (16b) an jeder U-Schiene (16) für die Adapterstücke (4d) der Containerunterplatte (4), aufweist.

7. Kombination nach einem der Ansprüche 1 bis 6, **dadurch gekennzeichnet, dass** das Positioniersystem zur rotatorischen Ausrichtung des Reifencontainers (3) in der Reifenheizpresse (1)
als zweites Positionierelement eine in der Containerunterplatte (4) ausgebildete Nut (4b) und
als erstes Positionierelement ein auf der Pressenplatte (8) befindliches Ausrichtelement (8c) aufweist,
wobei bei in Blockierposition befindlichen Schienen (16) das Ausrichtelement (8c) in die Nut (4b) eingreift und bei in Freigabeposition befindlichen Schienen (16) das Ausrichtelement (8c) mit der Nut (4b) außer Eingriff ist.

8. Kombination nach einem der Ansprüche 1 bis 7, **dadurch gekennzeichnet, dass** das Positioniersystem zur zentrischen Ausrichtung des Reifencontainers (3) in der Reifenheizpresse (1)
als zweites Positionierelement ein in der Containerunterplatte (4) ausgebildetes zentrisches Aufnahmeloch (4a) und
als erstes Positionierelement einen auf der Pressenplatte (8) befindlichen Zentrierring (8b) aufweist,
wobei bei in Blockierposition befindlichen Schienen (16) der Zentrierring (8b) in das Aufnahmeloch (4a) eingreift und bei in Freigabeposition befindlichen Schienen (16) mit dem Aufnahmeloch (4a) außer Eingriff ist.

9. Kombination nach einem der Ansprüche 1 bis 8, **dadurch gekennzeichnet, dass** diese ein Montagesystem zur Montage des Containeroberteils (5) am Pressenoberteil (9) bei geschlossener Reifenheizpresse (1) umfasst, welches von im Containeroberteil (5) ausgebildeten T-Nuten (5b) und am Pressenoberteil (9) befindlichen, mit den T-Nuten (5b) in und außer Eingriff bringbaren Schwenkklemmzylindern (18) gebildet ist.

10. Kombination nach einem der Ansprüche 1 bis 9, **dadurch gekennzeichnet, dass** diese ein Heizsystem zum Erwärmen des montierten Reifencontainers (3) aufweist, welches Folgendes umfasst:
- Einen in der Containerunterplatte (4) integrierten Heizkreislauf mit Anschlussstellen (4c),
- einen im Containeroberteil (5) integrierten Heizkreislauf mit Anschlussstellen (5a) und
- einen Heizmediumanschluss (10) mit einem an die Anschlussstellen (4a) der Containerunterplatte (4) ankoppelbaren Anschlussteil (10a) und einem an die Anschlussstellen (5a) des Containeroberteils (5) ankoppelbaren Anschlussteil (10b).

11. Kombination nach einem der Ansprüche 1 bis 10, **dadurch gekennzeichnet, dass** sie eine Fixiereinrichtung (15) zum An- und Abkoppeln des Containerwechseltrolleys (2) an der Reifenheizpresse (1) aufweist, welche Folgendes umfasst:
- Zwei am Containerwechseltrolley (2) angebrachte, auf je einer Positionierungsbuchse (15b) aufsitzende, frei drehbar gelagerte, in vertikaler Richtung ausgerichtete Rollen (15a),
- zwei an der Reifenheizpresse (1) angebrachte, L-förmig gewinkelte Führungsplatten (15d), an welchen die Rollen (15a) abrollbar sind, und
- zwei an der Reifenheizpresse (1) angebrachte mit den Positionierungsbuchsen (15b) in und außer Eingriff bringbare, insbesondere in variabler vertikaler Position, fixier- und lösbare Positionierungsstifte (15c).

12. Containerwechseltrolley (2) für eine Kombination nach einem der Ansprüche 1 bis 11 umfassend:
- Ein Gestell (11) mit Gabelzinkenaufnahmen (11a),
- zumindest einen am Gestell (11) angeordneten Rollenförderer (12), auf welchem der Reifencontainer (3) verschiebbar ist,
- zwei seitlich am Gestell (11) angeordnete parallele Führungsleisten (13) zur Führung des Reifencontainers (3) und
- eine am Gestell (11) angeordnete, in den Führungsleisten (13) verschiebbare, an die Containerunterplatte (4) des Reifencontainers (3) an- und abkoppelbare Vorschubeinrichtung (14) zum linearen Bewegen des Reifencontainers (3) auf dem Rollenförderer (12).

13. Containerwechseltrolley (2) nach Anspruch 12, **dadurch gekennzeichnet, dass** dieser am Gestell (11) einen in vertikaler Richtung variabel verstellbaren Stützfuß (19) aufweist.

14. Verfahren zum Montieren (3) eines Reifencontainers (3) in der Reifenheizpresse (1) unter Verwendung der Kombination nach einem der Ansprüche 1 bis 11 sowie insbesondere unter Verwendung des Containerwechseltrolleys (2) nach Anspruch 12 oder 13, mit folgenden nacheinander ablaufenden Schritten:
i. Ankoppeln eines den Reifencontainer (3) tragenden Containerwechseltrolleys (2) an der Reifenheizpresse (1),
ii. Einschieben des Reifencontainers (3) in die geöffnete Reifenheizpresse (1), wobei der Reifencontainer (3) mittels des Positioniersystems translatorisch ausgerichtet wird,
iii. Zentrisches und rotatorisches Ausrichten des Reifencontainers in der Reifenheizpresse mittels der Positioniersystems,
iv. Schließen der Reifenheizpresse (1),
v. Montage des Containeroberteils (5) am Pressenoberteil (9),
vi. In Schritt iii. oder nach Schritt v. Anklemmen der Containerunterplatte (4) an der Pressenplatte (8).

## Claims

1. Combination of
a) a tire heating press (1) with a press plate (8) and with a press top part (9),
b) a tire container (3) which is installable in the tire heating press (1) and which has a container bottom plate (4) and a container top part (5),
c) a container change trolley (2) which is couplable to and decouplable from the tire heating press (1),
**characterized in that** the combination furthermore has:
d) a guide system for the introduction and removal of the tire container (3) when the container change trolley (2) is in a coupled-on state, which guide system comprises rails (16) which are arranged laterally with respect to the press plate (8) or rails which are arranged on the container change trolley (2) and which, when the container change trolley (2) is in a coupled-on state, are situated or positionable laterally with respect to the press plate (8),
wherein the rails (16) are movable in a vertical direction and, by being lowered, can be brought into a blocking position and, by being raised, can be brought into a release position,
e) a positioning system for the translational, central and rotational alignment of the tire container (3), comprising first positioning elements (8b, 8c, 16b) on the tire heating press (1) and second positioning elements (4a, 4b, 4d) which are situated on the container bottom plate (4) and to which there are assigned second positioning elements (4d) which can be guided on the rails (16) of the guide system,
wherein the first and the second positioning elements (4a, 4b, 4d, 8a, 8c, 16b) interact such that,
when the container change trolley (2) is in a coupled-on state and the rails (16) are situated in the release position, the tire container (3) can be slid into and out of the tire heating press (1), and,
when the tire container (3) has been slid into the tire heating press (1) and the rails (16) are situated in the blocking position, the tire container (3) is in alignment.

2. Combination according to Claim 1, **characterized in that** the rails on which the second positioning elements (4d) can be guided are U-shaped rails (16) which, when the tire container (3) has been introduced into the tire heating press (1), in their blocking position, clamp the container bottom plate (4) to the press plate (8) via the second positioning elements (4d).

3. Combination according to Claim 2, **characterized in that** the U-shaped rails (16) are arranged laterally with respect to the press plate (8) on the tire heating press (1).

4. Combination according to any of Claims 1 to 3, **characterized in that** the guide system has guide strips (13) situated on the container change trolley (2), which guide strips
either adjoin the rails (16) arranged on the container change trolley (2), or,
when the container change trolley (2) is in a coupled-on state, adjoin the rails (16) arranged adjacent to the press plate (8).

5. Combination according to any of Claims 1 to 4, **characterized in that** the positioning system for the rotational alignment of the tire container (3) on the container change trolley (2)
has, as second positioning elements (4d) which can be guided on the rails (16) of the guide system, adapter pieces (4d) which are situated on the container bottom plate (4) and which in particular each encompass a circular-segment-shaped edge portion of the container bottom plate (4) and have a side surface (4d') running parallel to the chord of the circular segment.

6. Combination according to any of Claims 1 to 5, **characterized in that** the positioning system for the translational alignment of the tire container (3) in the tire heating press (1)
has, as first positioning element, at least one stop which is situated on the tire heating press (1), in particular has, as first positioning elements, in each case one end stop (16b) on each U-shaped rail (16) for the adapter pieces (4d) of the container bottom plate (4).

7. Combination according to any of Claims 1 to 6, **characterized in that** the positioning system for the rotational alignment of the tire container (3) in the tire heating press (1)
has, as second positioning element, a groove (4b) formed in the container bottom plate (4), and
has, as first positioning element, an alignment element (8c) situated on the press plate (8),
wherein, when the rails (16) are situated in the blocking position, the alignment element (8c) engages into the groove (4b) and, when the rails (16) are situated in the release position, the alignment element (8c) is not in engagement with the groove (4b).

8. Combination according to any of Claims 1 to 7, **characterized in that** the positioning system for the central alignment of the tire container (3) in the tire heating press (1)
has, as second positioning element, a central receiving hole (4a) formed in the container bottom plate (4), and
has, as first positioning element, a centering ring (8b) situated on the press plate (8),
wherein, when the rails (16) are situated in the blocking position, the centering ring (8b) engages into the receiving hole (4a) and, when the rails (16) are situated in the release position, said centering ring is not in engagement with the receiving hole (4a).

9. Combination according to any of Claims 1 to 8, **characterized in that** said combination comprises an installation system for the installation of the container top part (5) on the press top part (9) when the tire heating press (1) is in a closed state, which installation system is formed by T-shaped grooves (5b) formed in the container top part (5) and by pivoting clamping cylinders (18) which are situated on the press top part (9) and which can be moved into and out of engagement with the T-shaped grooves (5b).

10. Combination according to any of Claims 1 to 9, **characterized in that** said combination has a heating system for warming the installed tire container (3), which heating system comprises the following:
- a heating circuit which is integrated in the container bottom plate (4) and which has connection points (4c),
- a heating circuit which is integrated in the container top part (5) and which has connection points (5a), and
- a heating medium connection (10) with a connection part (10a) which is couplable to the connection points (4a) of the container bottom plate (4) and with a connection part (10b) which is couplable to the connection points (5a) of the container top part (5).

11. Combination according to any of Claims 1 to 10, **characterized in that** said combination has a fixing device (15) for the coupling and decoupling of the container change trolley (2) to and from the tire heating press (1), which fixing device comprises the following:
- two rollers (15a) which are attached to the container change trolley (2) and which are seated on in each case one positioning bushing (15b) and which are mounted so as to be freely rotatable and which are aligned in a vertical direction,
- two guide plates (15d) which are attached to the tire heating press (1) and which are angled in L-shaped fashion and on which the rollers (15a) can roll, and
- two positioning pins (15c) which are attached to the tire heating press (1) and which can be moved into and out of engagement with the positioning bushings (15b) and which are fixable and releasable in particular in a variable vertical position.

12. Container change trolley (2) for a combination according to any of Claims 1 to 11, comprising:
- a framework (11) with fork arm receptacles (11a),
- at least one roller conveyor (12) which is arranged on the framework (11) and on which the tire container (3) is displaceable,
- two parallel guide strips (13) which are arranged laterally on the framework (11) and which serve for guiding the tire container (3), and
- a feed device (14) which is arranged on the framework (11) and which is displaceable in the guide strips (13) and which is couplable and decouplable to and from the container bottom plate (4) of the tire container (3) and which serves for the linear movement of the tire container (3) on the roller conveyor (12).

13. Container change trolley (2) according to Claim 12, **characterized in that** said container change trolley has, on the framework (11), a support foot (19) which is variably adjustable in a vertical direction.

14. Method for installing (3) a tire container (3) in the tire heating press (1) using the combination according to any of Claims 1 to 11 and in particular using the container change trolley (2) according to Claim 12 or 13, having the following steps which are performed in succession:
i. coupling a container change trolley (2) which bears the tire container (3) to the tire heating press (1),
ii. sliding the tire container (3) into the opened tire heating press (1), wherein the tire container (3) is translationally aligned by means of the positioning system,
iii. centrally and rotationally aligning the tire container in the tire heating press by means of the positioning system,
iv. closing the tire heating press (1),
v. installing the container top part (5) on the press top part (9),
vi. in step iii. or after step v., clamping the container bottom plate (4) to the press plate (8).

## Revendications

1. Combinaison de
a) une presse de chauffage de pneus (1) avec une plaque de presse (8) et une partie supérieure de presse (9),
b) un conteneur de pneus (3) pouvant être monté dans la presse de chauffage de pneus (1) avec une plaque inférieure de conteneur (4) et une partie supérieure de conteneur (5),
c) un chariot de changement de conteneur (2) pouvant être accouplé à la presse de chauffage de pneus (1) et désaccouplé de celle-ci,
**caractérisée en ce que** la combinaison présente en outre :
d) un système de guidage pour l'introduction et l'extraction du conteneur de pneus (3) lorsque le chariot de changement de conteneur (2) est accouplé, lequel système de guidage comprend des rails (16) agencés latéralement à la plaque de presse (8) ou des rails agencés sur le chariot de changement de conteneur (2), se trouvant ou pouvant être positionnés latéralement à la plaque de presse (8) lorsque le chariot de changement de conteneur (2) est accouplé,
les rails (16) étant déplaçables en direction verticale et pouvant être amenés dans une position de blocage par abaissement et dans une position de libération par soulèvement,
e) un système de positionnement pour l'orientation en translation, en centrage et en rotation du conteneur de pneus (3), comprenant des premiers éléments de positionnement (8b, 8c, 16b) sur la presse de chauffage de pneus (1) et des deuxièmes éléments de positionnement (4a, 4b, 4d) se trouvant sur la plaque inférieure de conteneur (4), auxquels appartiennent des deuxièmes éléments de positionnement (4d) pouvant être guidés sur les rails (16) du système de guidage, les premiers et les deuxièmes éléments de positionnement (4a, 4b, 4d, 8a, 8c, 16b) coopérant de telle sorte que
lorsque le chariot de changement de conteneur (2) est accouplé et que les rails (16) se trouvent en position de libération, le conteneur de pneus (3) peut être inséré dans la presse de chauffage de pneus (1) et être sorti de celle-ci, et lorsque le conteneur de pneus (3) est inséré dans la presse de chauffage de pneus (1) et que les rails (16) se trouvent en position de blocage, le conteneur de pneus (3) est orienté.

2. Combinaison selon la revendication 1, **caractérisée en ce que** les rails sur lesquels les deuxièmes éléments de positionnement (4d) peuvent être guidés sont des rails en U (16) qui, lorsque le conteneur de pneus (3) est introduit dans la presse de chauffage de pneus (1), serrent dans leur position de blocage la plaque inférieur de conteneur (4) contre la plaque de presse (8) par l'intermédiaire des deuxièmes éléments de positionnement (4d).

3. Combinaison selon la revendication 2, **caractérisée en ce que** les rails en U (16) sont agencés latéralement à la plaque de presse (8) sur la presse de chauffage de pneus (1).

4. Combinaison selon l'une quelconque des revendications 1 à 3, **caractérisée en ce que** le système de guidage présente des barres de guidage (13) se trouvant sur le chariot de changement de conteneur (2), qui
soit se raccordent aux rails (16) agencés sur le chariot de changement de conteneur (2),
soit se raccordent aux rails (16) agencés à côté de la plaque de presse (8) lorsque le chariot de changement de conteneur (2) est accouplé.

5. Combinaison selon l'une quelconque des revendications 1 à 4, **caractérisée en ce que** le système de positionnement pour l'orientation en rotation du conteneur de pneus (3) sur le chariot de changement de conteneur (2) présente en tant que deuxièmes éléments de positionnement (4d) pouvant être guidés sur les rails (16) du système de guidage, des pièces d'adaptation (4d) se trouvant sur la plaque inférieure de conteneur (4), qui encadrent notamment chacune une pièce de bord en forme de segment de cercle de la plaque inférieure de conteneur (4) et présentent une surface latérale (4d') s'étendant parallèlement à la corde du segment de cercle.

6. Combinaison selon l'une quelconque des revendications 1 à 5, **caractérisée en ce que** le système de positionnement pour l'orientation en translation du conteneur de pneus (3) dans la presse de chauffage de pneus (1) présente en tant que premier élément de positionnement au moins une butée se trouvant sur la presse de chauffage de pneus (1), notamment en tant que premiers éléments de positionnement respectivement une butée d'extrémité (16b) sur chaque rail en U (16) pour les pièces d'adaptation (4d) de la plaque inférieure de conteneur (4).

7. Combinaison selon l'une quelconque des revendications 1 à 6, **caractérisée en ce que** le système de positionnement pour l'orientation en rotation du conteneur de pneus (3) dans la presse de chauffage de pneus (1) présente
en tant que deuxième élément de positionnement une rainure (4b) réalisée dans la plaque inférieure de conteneur (4), et
en tant que premier élément de positionnement un élément d'orientation (8c) se trouvant sur la plaque de presse (8),
l'élément d'orientation (8c) étant engagé dans la rainure (4b) lorsque les rails (16) se trouvent en position de blocage et l'élément d'orientation (8c) étant dégagé de la rainure (4b) lorsque les rails (16) se trouvent en position de libération.

8. Combinaison selon l'une quelconque des revendications 1 à 7, **caractérisée en ce que** le système de positionnement pour l'orientation en centrage du conteneur de pneus (3) dans la presse de chauffage de pneus (1) présente
en tant que deuxième élément de positionnement un trou de réception central (4a) réalisé dans la plaque inférieure de conteneur (4) et
en tant que premier élément de positionnement une bague de centrage (8b) se trouvant sur la plaque de presse (8),
la bague de centrage (8b) étant engagée dans le trou de réception (4a) lorsque les rails (16) se trouvent en position de blocage et étant désengagée du trou de réception (4a) lorsque les rails (16) se trouvent en position de libération.

9. Combinaison selon l'une quelconque des revendications 1 à 8, **caractérisée en ce que** celle-ci comprend un système de montage pour le montage de la partie supérieure de conteneur (5) sur la partie supérieure de presse (9) lorsque la presse de chauffage de pneus (1) est fermée, qui est formé par des rainures en T (5b) réalisées dans la partie supérieure de conteneur (5) et des vérins de serrage pivotants (18) se trouvant sur la partie supérieure de presse (9), pouvant être mis en engagement et hors d'engagement avec les rainures en T (5b).

10. Combinaison selon l'une quelconque des revendications 1 à 9, **caractérisée en ce que** celle-ci présente un système de chauffage pour chauffer le conteneur de pneus monté (3), qui comprend les éléments suivants :
- un circuit de chauffage intégré dans la plaque inférieure de conteneur (4), avec des points de raccordement (4c),
- un circuit de chauffage intégré dans la partie supérieure de conteneur (5), avec des points de raccordement (5a) et
- un raccordement de fluide chauffant (10) avec une partie de raccordement (10a) pouvant être accouplée aux points de raccordement (4a) de la plaque inférieure de conteneur (4) et une partie de raccordement (10b) pouvant être accouplée aux points de raccordement (5a) de la partie supérieure de conteneur (5).

11. Combinaison selon l'une quelconque des revendications 1 à 10, **caractérisée en ce qu'**elle présente un dispositif de fixation (15) pour l'accouplement et le désaccouplement du chariot de changement de conteneur (2) à la presse de chauffage de pneus (1), qui comprend les éléments suivants :
- deux rouleaux (15a) disposés sur le chariot de changement de conteneur (2), reposant chacun sur une douille de positionnement (15b), logés de manière à pouvoir tourner librement, orientés en direction verticale,
- deux plaques de guidage (15d) coudées en forme de L, disposées sur la presse de chauffage de pneus (1), sur lesquelles les rouleaux (15a) peuvent rouler, et
- deux broches de positionnement (15c) disposées sur la presse de chauffage de pneus (1), pouvant être mises en engagement et hors d'engagement avec les douilles de positionnement (15b), notamment en position verticale variable, pouvant être fixées et détachées.

12. Chariot de changement de conteneur (2) pour une combinaison selon l'une quelconque des revendications 1 à 11 comprenant :
- un châssis (11) avec des logements de fourches (11a),
- au moins un convoyeur à rouleaux (12) agencé sur le châssis (11), sur lequel le conteneur de pneus (3) peut être coulissé,
- deux barres de guidage parallèles (13) agencées latéralement sur le châssis (11) pour guider le conteneur de pneus (3) et
- un dispositif d'avance (14) agencé sur le châssis (11), pouvant être coulissé dans les barres de guidage (13), pouvant être accouplé à la plaque inférieure de conteneur (4) du conteneur de pneus (3) et désaccouplé de celle-ci pour déplacer linéairement le conteneur de pneus (3) sur le convoyeur à rouleaux (12).

13. Chariot de changement de conteneur (2) selon la revendication 12, **caractérisé en ce que** celui-ci présente sur le châssis (11) un pied d'appui (19) réglable de manière variable en direction verticale.

14. Procédé de montage (3) d'un conteneur de pneus (3) dans la presse de chauffage de pneus (1) en utilisant la combinaison selon l'une quelconque des revendications 1 à 11, et notamment en utilisant le chariot de changement de conteneur (2) selon la revendication 12 ou 13, avec les étapes suivantes qui se déroulent successivement :
i. l'accouplement d'un chariot de changement de conteneur (2) portant le conteneur de pneus (3) à la presse de chauffage de pneus (1),
ii. l'insertion du conteneur de pneus (3) dans la presse de chauffage de pneus (1) ouverte, le conteneur de pneus (3) étant orienté en translation au moyen du système de positionnement,
iii. l'orientation en centrage et en rotation du conteneur de pneus dans la presse de chauffage de pneus au moyen du système de positionnement,
iv. la fermeture de la presse de chauffage de pneus (1),
v. le montage de la partie supérieure de conteneur (5) sur la partie supérieure de presse (9),
vi. à l'étape iii. ou après l'étape v., le serrage de la plaque inférieure de conteneur (4) sur la plaque de presse (8).
